# EUROPEAN PATENT SPECIFICATION

(11) **EP 2 571 304 B1**
(45) Date of publication and mention of the grant of the patent: **27.04.2016**
(21) Application number: 12181834.8
(22) Date of filing: 27.08.2012
(51) Int. Cl.: H04W 12/02, H04L 29/06, H04W 88/06, H04W 76/02

(54) **Method for secure communication via secure cellular phones**
Verfahren für ein sichere Kommunikation durch sichere Mobiltelefone
Procédé pour une communication sécurisée par l'intermédiare de téléphones cellulaires sécurisés

(30) Priority: 13.09.2011 TR 201108981
(43) Date of publication of application: 20.03.2013
(73) Proprietor: Aselsan Elektronik Sanayi ve Ticaret Anonim Sirketi, 06370 Ankara (TR)
(72) Inventor: Kesen, Lokman, 06370 Ankara (TR); Yazici, Ali, 06370 Ankara (TR); Ozmen Tokcan, Zeynep, 06370 Ankara (TR); Yildirimoglu, Ayca, Bahar, 06370 Ankara (TR)
(74) Representative: Dericioglu Kurt, Ekin

(56) References cited:
- US-A- 5 594 776
- US-A1- 2010 093 330
- US-A1- 2010 202 616
- H.F. Qi, X.H. Yang, R. Jiang, B. Liang and S.J. Zhou: "Novel End-to-End Voice Encryption Method in GSM System", Networking, Sensing and Control, 2008. ICNSC 2008. IEEE International Conference on , 8 April 2008 (2008-04-08), pages 217-220, XP002689119, Retrieved from the Internet: URL:https://ieeexplore.ieee.org/stamp/stam p.jsp?tp=&arnumber=4525213 [retrieved on 2012-12-12]
- N.N. Katugampala, K.T. Al-Naimi, S. Villette and A.M. Kondoz: "Real-time end-to-end secure voice communication over GSM voice channel", , 2005, pages 1-4, XP002689120, Retrieved from the Internet: URL:http://www.eurasip.org/Proceedings/Eus ipco/Eusipco2005/defevent/papers/cr1512.pd f [retrieved on 2012-12-12]

## Description

### Field of the Invention

The present invention relates to methods for providing secure communication via secure cellular phones.

### Background of the Invention

In the currently used secure communication techniques, GSM (Global System for Mobile Communication) data channels are used for providing secure communication.

In these techniques, since the cellular phone cost effectiveness is low, in some rural areas there are no GSM data channels and secure communication cannot be provided. Additionally, even if the user has data service subscription in her/his own operator, failure to receive data service due to lack of agreements or insufficiency of technical infrastructure in some locations during international roaming poses problems in establishing secure communication.

Another problem in the current techniques is that, as a result of installation of base stations in residential areas, at large nonresidential areas such as highlands, seas or deserts, users are out of the coverage area of GSM network. When the user is out of the coverage area, s/he is deprived of secure communication.

In the currently used secure communication methods performed via data channels of public radio or mobile communication devices, if the said data channels cannot be provided, there are no alternative methods for establishing secure communication. Establishing secure communication is totally dependant on GSM data channels and this causes the above mentioned problems.

The United States patent application no US6052576, an application in the state of the art, discloses a radio device which uses voice channels and data channels of public telephony network. The invention also comprises an additional unit which can be connected to the data interface of the radio device and which allows calls made via the data channels of the network. The device only uses GSM data channels; it does not include an additional scenario for situations where the channels are out of use.

The United States patent document no. US 2010124330, an application in the state of the art, discloses a secure communication device comprising a modem connected to a satellite board. In the invention, DTMF (Dual-tone multi-frequency signaling) tones are captured, encrypted modem information is demodulated, and both data are converted into an ASCII (American Standard Code for Information Interchange) string and presented to a data port of a satellite phone. The system allows control of the satellite functions from the secure side of the encryption device. The invention disclosed in this document also faces the same problem with the invention mentioned in the previous paragraph, and secure communication cannot be established in the case that data channels cannot be provided.

The United States patent application no US 7350232, an application within the state of the art, discloses a method for secure communication which uses a satellite or a central processor with the ability to integrate information from the layers of communications into a security control plane. In this method, information is collected via satellite network but secure communication is not provided.

The United States Patent document no US 2010/093330, know in the state of the art, discloses a communication device providing Access to the called party by respectively using wireless data channel or SMS communication in case the calling party cannot reach the called party through voice channels on the wireless communication network. In this document satellite data channel is not used, an a secure communication cannot be performed.

The United States Patent Document no 2010/202616, known in the state of the art, discloses performing an identity authentication process with less data transfer by decreasing the data size relative to X.509 type certificates defined in the standards by means of using micro certificate technique on wireless communication network.

### Summary of the Invention

The objective of the present invention is to provide a secure communication system and method which provide uninterrupted secure communication by using secure cellular phones via utilizing GSM data channels, GSM voice channels and satellite communication network data channels respectively.

The invention is defined by independent claim 1.

### Detailed Description of the Invention

The secure communication system and method developed to fulfill the objectives of the present invention is illustrated in the accompanying figures, in which:

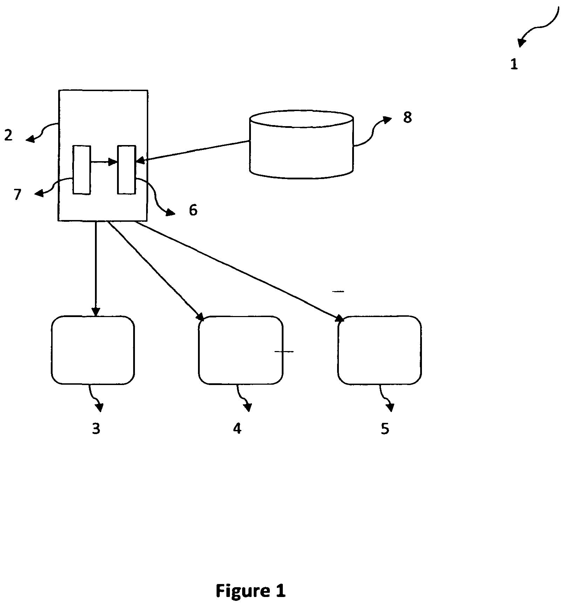

**Figure 1** is the schematic view of the secure communication system.

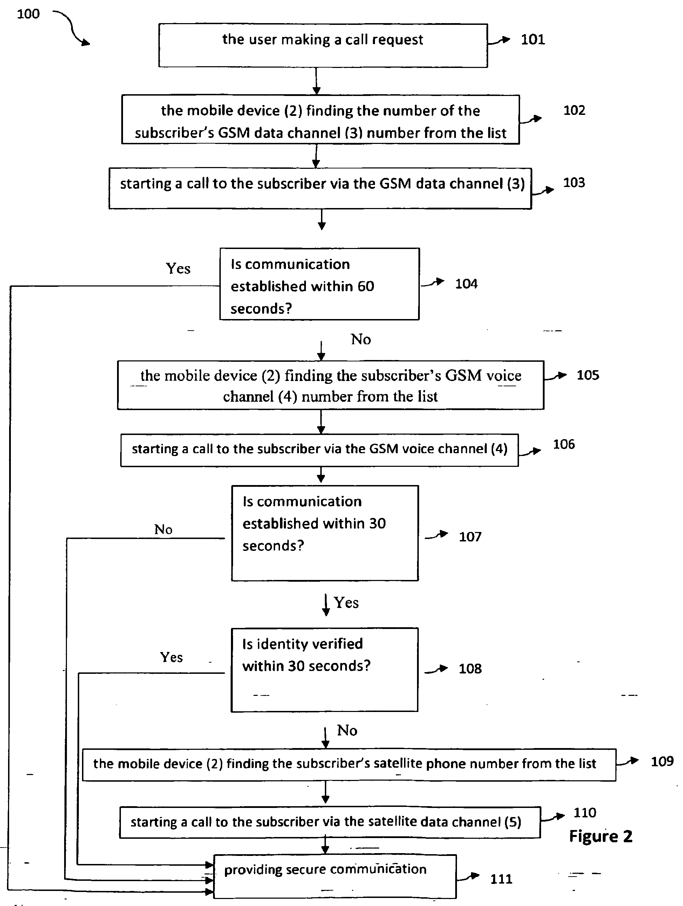

**Figure 2** is the flow chart of the secure communication method.

The components in the figures are assigned numerals as follows:
1. Secure communication system
2. Secure mobile device
3. GSM data channel
4. GSM voice channel
5. Satellite data channel
6. Memory module
7. Control module
8. Management center
100. Secure communication method

The secure communication system (1) of the present invention mainly comprises
- at least one secure mobile device (2) by which the user makes a call and starts secure communication,
- at least one GSM data channel (3) which enables transfer of voice data of user conversations,
- at least one GSM voice channel (4) which enables transfer of voice data of user conversations and which is used when communication cannot be established via the GSM data channel (3),
- at least one GSM voice channel (5) which enables transfer of voice data of user conversations and which is used when communication cannot be established via the GSM data channel (3) and GSM voice channel (4),
- at least one memory module (6) in which GSM voice, data and satellite phone numbers of defined users are kept,
- at least one control module (7) which carries out controls of secure communication state and user identity authentication,
- at least one management center (8) in which numbers of the GSM voice and data channels (3) (4) and numbers of the satellite phones of the subscribers are kept, and in which the subscriber communication authorization procedures are carried out.

In the inventive secure communication system (1),
Secure mobile device (2) is used by the user to be able to start or receive a call. When the call is accepted, the secure mobile device (2) performs data traffic and provides secure communication.

GSM data channel (3) is used for establishing secure communication. When the user desires to establish secure communication, the secure mobile device (2) starts a call via the GSM data channels (3). When a secure communication is established as a result of the call, data exchange is realized via the GSM data channels (3).

In the cases where the GSM data channel (3) cannot provide service, when the user desires to establish secure communication, communication cannot be established as a result of the call that the mobile device (2) starts via the GSM data channel (3). Upon failure to establish communication, the mobile device (2) starts a call via the GSM voice channel (4). When a secure communication is established as a result of the call, data exchange is realized via the GSM voice channel (4).

In the cases where GSM data and voice channels (3), (4) cannot provide service and identity verification cannot be performed at a call established via the GSM voice channel (4), the mobile device (2) starts a call via the satellite data channel (5). When a secure communication is established as a result of the call, data exchange is realized via the satellite data channel (5).

Queries such as identity verification, whether or not the calls are established, which data channel (3), (4), (5) the communication is provided through are performed by the control module (7) located in the mobile device (2).

Identity verification process is performed by the control module (7) by using the subscriber identity and number lists in the memory module (6) provided in the mobile device.

The subscriber number lists include the numbers of the GSM voice and data channels (3), (4) and satellite data channel (5) of the subscribers. The mobile device (2) selects from the number lists in the memory module (6) the number of the data channel (3), (4), (5) via which it will start a call.

The number lists are kept in the management center (8) and the editing procedures such as making changes on the numbers and designating communication authorization are performed in the management center (8). The management center (8) transfers the number lists to the memory module (6) in the mobile device (2) by means of wireless communication.

A secure communication method (100) enabling to establish uninterrupted secure communication comprises the steps of
- the user making a call request (101),
- the mobile device (2) finding the number of the subscriber's GSM data channel (3) number from the list (102),
- starting a call to the subscriber via the GSM data channel (3) (103),
- querying whether communication is established or not and whether identity verification process is completed or not within 60 seconds (104),
- the mobile device (2) finding the subscriber's GSM voice channel (4) number from the list (105),
- starting a call to the subscriber via the GSM voice channel (4) (106),
- querying whether communication is established within 30 seconds (107),
- performing identity verification within 30 seconds (108),
- the mobile device (2) finding the subscriber's satellite phone number from the list (109),
- starting a call to the subscriber via the satellite data channel (5) (110),
- providing secure communication (111).

In the secure communication method (100), the user starts a call to establish secure communication by using the keypad on the mobile device (2) (101). When the call request made via the keypad is received, the mobile device (2) finds the GSM data channel (3) number of the subscriber, to which a call will be sent, from the list which is defined by the management center (8) and transmitted to the memory module (6) (102). Upon finding the subscriber's GSM data channel number, the mobile device (2) starts a call to that subscriber via the GSM data channel (3) by using the said number (103). The control module (7) controls whether secure communication is established or not for 60 seconds from the start of the call (104). The control module (7) stops the control process if it detects that communication is established any time within the said 60 seconds. Thus secure communication is performed by providing data flow via the GSM data channel (3) (111).

If the control module (7) detects, during the control process it carries out within 60 seconds from the start of the call via the GSM data channel (3), that secure communication is not established, the mobile device (2) finds the subscriber's GSM voice channel (4) number from the list in the memory module (6) (105). By using the GSM voice channel (4) number of the subscriber, the mobile device (2) starts a call to the subscriber having the said number via the GSM voice channel (106). The control module (7) controls whether secure communication is established or not for 30 seconds from the start of the call (107). If the control module (7) detects that communication is established at any time within the said 30 seconds, it carries out an identity control within 30 seconds beginning from the moment of the said detection (108). If the control module (7) performs identity verification at any time within the said 30 seconds, it stops the identity control process. Secure communication is performed by providing data flow via the GSM voice channel (111).

If the control module (7) detects that secure communication is not established within 30 seconds from the start of the call via the GSM voice channel (4) or detects that identity verification is not performed within the 30 seconds following the moment it stops the control upon determining that secure communication is established via the GSM voice channel, the mobile device (2) finds the subscriber's satellite phone number from the list in the memory module (109). The mobile device (2) starts a call to the subscriber having the said number via the satellite data channel (5) (110). Secure communication is performed by providing data flow via the satellite data channel (111).

Identity verification process in steps 104 and 108 is performed by controlling the certificate numbers given to the secure mobile devices (2) by the authorized center with digital signatures. When the certificate number of each device (2) intended to establish secure communication is validated, identity verification process is completed.

With the inventive secure communication system (1) and method (100), uninterrupted secure communication is provided via data channel (3) at regions where GSM data channels (3) are provided; while at places where data channels (3) are not provided or where access is insufficient, it is provided via GSM voice channels (4), and at rural areas where neither of them are provided, it is provided via satellite phone network.

A very wide coverage area is provided by means of the inventive secure communication system (1) and method (100) and the problem of going out of the coverage area experienced in the prior art is eliminated.

Within the scope of this basic concept, it is possible to develop various embodiments of the inventive secure communication system (1) and method (100). The invention can not be limited to the examples described herein and it is essentially as defined in the claims.

## Claims

1. A secure communication method (100), which enables to establish secure communication and allows a wide coverage area, comprising the steps of
- a user making a call request (101),
- a mobile device (2) of the user finding the number of the subscriber's GSM data channel (3) number from a list (102) in a memory module (6) of the mobile device (2),
- the mobile device (2) starting a call to the subscriber via the GSM data channel (3) (103),
**characterized by** the steps of
- a control module (7) the mobile device controlling whether secure communication is established or not within 60 seconds from the moment the call is started via the GSM data channel (3) (104),
- if the control module (7) detects, during the control process it carries out within 60 seconds from the start of the call via the GSM data channel, that secure communication is not established, the mobile device (2) finding the subscriber's GSM voice channel (4) number from the list in the memory module (6) (105); and the mobile device (2), by using the GSM voice channel (4) number of the subscriber, starting a call to the subscriber having the said number via the GSM voice channel (106),
- if the control module (7) detects that communication is established at any time within 30 seconds following the start of the call via the GSM voice channel, the control module (7) carrying out an identity control within 30 seconds beginning from the moment of the said detection (108),
- if the control module (7) performs identity verification at any time within the said 30 seconds, stopping the identity control process and performing secure communication by providing data flow via the GSM voice channel (111),
- if the control module (7) detects that secure communication is not established within 30 seconds from the start of the call via the GSM voice channel (4) or detects that identity verification is not performed within the 30 seconds following the moment it stops the control upon determining that secure communication is established via the GSM voice channel, the mobile device (2) finding the subscriber's satellite phone number from the list (109),
- starting a call to the subscriber via the satellite data channel (5) (110),
- providing secure communication (111).

2. A secure communication method (100) according to claim 1 **characterized by** the step 108 wherein identity verification is performed by controlling the certificate numbers given to the secure mobile devices (2) by the authorized center with digital signatures.

## Patentansprüche

1. Ein Verfahren für sichere Kommunikation (100), welches die Herstellung der sicheren Kommunikation ermöglicht und einem weit reichenden Bedeckungsgebiet erlaubt, umfassend die Verfahrensschritte;
- ein Benutzer fordert einen Anruf (101),
- ein Mobilgerät (2) des Benutzers findet die Nummer von GSM-Datenkanal (3) des Teilnehmers aus einer Liste (102) in einem Speichermodul (6) des Mobilgeräts (2),
- das Mobilgerät (2) startet einen Anruf an den Teilnehmer über den GSM Datenkanal (3) (103),
**gekennzeichnet durch** die Schritte,
- ein Steuermodul (7) des Mobilgeräts kontrolliert, ob die sichere Kommunikation hergestellt ist oder nicht und zwar in 60 Sekunden von dem Moment an, an dem der Anruf über GSM-Datenkanal (3) gestartet ist (104),
- wenn das Steuermodul (7) feststellt, dass die sichere Kommunikation nicht hergestellt ist, wobei dies während des Kontrollvorgangs innerhalb von 60 Sekunden von dem Start des Anrufs über GSM-Datenkanal verwirklicht wird, das Mobilgerät (2) findet die Nummer des GSM-Sprechkanals (4) des Teilnehmers aus der Liste im Speichermodul (6) (105); und das Mobilgerät (2) startet einen Anruf an den Teilnehmer, der die erwähnte Nummer hat, über den GSM-Sprechkanal (106),
- wenn das Steuermodul (7) feststellt, dass die Kommunikation an irgendeinem Zeitpunkt innerhalb von 30 Sekunden nach dem Starten des Anrufs über GSM-Sprechkanal hergestellt ist, führt das Steuermodul (7) innerhalb von 30 Sekunden beginnend ab dem Moment der erwähnten Feststellung eine Identitätskontrolle aus (108),
- wenn das Steuermodul (7) Identitätsbestätigung an irgendeinem Zeitpunkt innerhalb von 30 Sekunden durchführt, wird der Kontrollvorgang der Identität gestoppt und die sichere Kommunikation wird **durch** Ermöglichung des Datenflusses über den GSM-Sprechkanal (111) ausgeführt,
- wenn das Steuermodul (7) feststellt, dass die sichere Kommunikation innerhalb von 30 Sekunden ab dem Starten des Anrufs über GSM-Sprechkanal (4) nicht hergestellt ist oder wenn es feststellt, dass die Identitätsbestätigung innerhalb von 30 Sekunden nach dem Moment nicht verwirklicht wurde, an dem es die Kontrolle zur Bestimmung stoppt, dass die sichere Kommunikation über GSM-Sprechkanal hergestellt ist, findet das Mobilgerät (2) die Satelliten-Telefonnummer des Teilnehmers aus der Liste (109),
- Starten eines Anrufs an den Teilnehmer über den Satelliten-Datenkanal (5) (110),
- Ermöglichung der sicheren Kommunikation (111).

2. Ein Verfahren für sichere Kommunikation (100) gemäß Anspruch 1, **gekennzeichnet durch** den Verfahrensschritt 108, wobei die Identitätsbestätigung durch Kontrollierung der Zertifikat-Nummern ausgeführt ist, die dem Mobilgerät (2) **durch** eine bevollmächtigte Zentrale mit digitalen Unterschriften vorgegeben sind.

## Revendications

1. Une méthode de communication (100) permettant d'établir une communication sécurisée et une zone de couverture, comportant les étapes
- d'un utilisateur faisant une demande d'appel (101),
- un dispositif portable (2) de l'utilisateur trouvant le numéro du canal de données GSM de l'abonnée (3) d'une liste (102) dans un module de mémoire (6) du dispositif portable (2),
- un dispositif portable (2) commençant un appel à l'abonnée par le canal de données GSM (3) (103),
**caractérisé par** les étapes suivantes:
- un module de contrôle (7) 'du dispositif portable contrôlant si la communication sécurisée est établie ou non dans 60 seconds du moment où l'appel est commencé par le canal de données GSM (3) (104), si le module de contrôle (7) détecte, pendant le processus de contrôle qu'on réalise dans 60 seconds du commencement de l'appel par le canal de données GSM, que cette communication sécurisée n'est pas établie, le dispositif portable (2) trouvant le numéro du canal vocale GSM de l'abonnée (4) de la liste dans le module de mémoire (6) (105); et le dispositif portable (2), en utilisant le numéro du canal vocale GSM (4), commençant un appel à l'abonnée possédant ledit nombre par le canal vocal GSM (106),
- si le module de contrôle (7) détecte que la communication est établie à un moment quelconque dans 30 secondes suivant le commencement de l'appel par le canal vocal GSM, le module de contrôle (7) effectuant un contrôle d'identité dans 30 seconds à partir du moment de ladite détection (108),
- si le module de contrôle (7) effectue une vérification d'identité à un moment quelconque dans lesdits 30 secondes, arrêtant le procédure de contrôle et exécutant une communication sécurisée en fournissant un flux de données par le canal vocal GSM (111),
- si le module de contrôle (7) détecte que la communication sécurisée n'est pas établie dans 30 secondes à partir du commencement de l'appel par le canal vocal GSM (4) ou détecte que la vérification d'identité n'est pas exécutée dans 30 secondes suivant le moment où qu'on arrête le contrôle sur la détermination que la communication sécurisée est établie par le canal vocal GSM, le dispositif portable (2) trouvant le numéro téléphonique satellite de la liste (109),
- le commencement d'un appel à l'abonnée par le canal de données satellite (5) (110),
- la fourniture d'une communication sécurisée (111).

2. Une méthode de communication sécurisée (100) selon la revendication 1, **caractérisée par** l'étape 108 où la vérification d'identité est réalisée en contrôlant les numéros de certificat donnés aux dispositifs portables sécurisés (2) par le centre compétente avec les signatures digitales.
